# EUROPEAN PATENT APPLICATION

(11) **EP 1 301 005 A2**
(43) Date of publication of application: **09.04.2003**
(21) Application number: 02019935.2
(22) Date of filing: 04.09.2002
(51) Int. Cl.: H04L 29/06, H04L 29/08, G06F 17/60

(54) **System and method for a server to enable and disable client computer features**

(30) Priority: 05.09.2001 US 317501 P
(71) Applicant: Intellectual Force, Inc., Mountain View, CA 94043 (US)
(72) Inventor: Takayo, Asayama, Sunnyvale, CA 94089 (US)
(74) Representative: 2K Patentanwälte, Kewitz & Kollegen

(57) **Abstract**

A server system comprises a database storing a list of disabled client device features authorized-to-be-enabled and an authorization client. The authorization client is communicatively coupled to the user database and to a client device. Further, the authorization client is capable to search the database to determine if a disabled feature is authorized to be used, and to send, to the client device, a command to enable the disabled feature if the client is authorized to use the feature.

## Description

### PRIORITY REFERENCE TO PRIOR APPLICATIONS

This application claims benefit of and incorporates by reference patent application serial number 60/317,501, entitled "System And Method For A Server To Enable And Disable Client Computer Features," filed on September 5, 2001, by inventor Takao Asayama.

### Technical Field

This invention relates generally to server/client communications, and more particularly, but not exclusively, provides a system and method for a server to enable client computer software features.

### Background

Conventionally, client computers execute software stored in local memory. For example, a client computer may execute an operating system, such as Microsoft Windows® 2000, a word processor, such as Microsoft® Word, and an Internet browser, such as Netscape Navigator®. To enable each piece of software stored in local memory, a user may have to first enter registration data, such as the user's name and address, and a registration code, such as a sixteen character alphanumeric code, to verify the authenticity of the software. Once the software is enabled, a user can usually load and run the software, with all its features enabled, for an unlimited time.

In addition, a client computer may enable a user to download shareware or other trial software from the Internet. Once installed in local memory, the user may only be able to use a subset of the software's features. Alternatively, the user may be able to use all of the software's features, but only for a limited time, such as one week, or the user may only be able to load and run the software a limited number of times. After the trial use has expired, all features, or a subset of features, may become disabled. To permanently enable all features of the trial or shareware software, a user may need to either download and install a full version of the software or may need to obtain an alphanumeric code and enter the code into the client computer to "unlock" the disabled features.

These conventional techniques to enable or disable software features can be time-consuming, complicated, and prone to error. For example, to enable features in trial software, a user may have to log onto a web payment site, register and pay for the software, wait until he or she receives an alphanumeric code via email, and then manually and correctly enter the alphanumeric code into a client computer when prompted.

Accordingly, a new and improved system and method for enabling and disabling software features are needed.

### SUMMARY

The present invention provides a system for a server to enable and disable client computer software features for use with a web-based communications platform that enables a business to create, manage, deliver, and track marketing campaigns. The features that can be enabled can comprise multimedia messages that are dynamic, personalized, measurable and consistently branded.

The system comprises an authorization client, a user activity-monitoring client, and a user database. The authorization client sends commands to a client computer to enable or disable features of software, such as displaying multimedia messages, stored in client computer memory. The authorization client determines when to authorize enablement or disablement of features based on data stored in the user database. The authorization client may also send content, such as multimedia messages, software, files, audio, video, and image data, etc., to the client computer for use with newly enabled or disabled features.

The user activity-monitoring client monitors activity of the client computer during a marketing campaign and records that activity in the user database, which can then be used by the authorization client. The user database includes client computer activity as monitored by the user activity-monitoring client, user registration data, and any other data that may be necessary for the authorization client to determine whether to send authorization to enable to disable features of software stored on the client computer or send content to the client computer.

The present invention further provides a server-side method for sending authorization to a client computer to enable software features. The method comprises: receiving a request from a client computer to access a feature, such as displaying a multimedia message from a marketing campaign; determining if the client computer is authorized to use the feature; if the client computer is authorized, determining the level of enablement (if there are varying levels of enablement) for the feature; sending a command corresponding to the level of enablement to the client computer authorizing enablement of a feature; and updating a user database to reflect enablement of the feature.

In another embodiment of the method, instead of receiving a request from a client computer, the method may instead comprise determining on a scheduled basis during a marketing campaign, which online client computers should have software features enabled or disabled according data stored in a user database. The method can then proceed as described above.

The system and method may advantageously enable a server to send commands to a client computer to enable and disable software features.

### BRIEF DESCRIPTION OF THE DRAWINGS

Non-limiting and non-exhaustive embodiments of the present invention are described with reference to the following figures, wherein like reference numerals refer to like parts throughout the various views unless otherwise specified.
FIG. 1 is a block diagram illustrating a network system in accordance with an embodiment of the present invention;
FIG. 2 is a block diagram illustrating an example computer in accordance with an embodiment of the present invention;
FIG. 3 is a block diagram illustrating the authorization system of server of FIG. 1;
FIG. 4 is a block diagram illustrating the user system of a user platform of FIG. 1;
FIG. 5 is a flowchart illustrating a method for a server to enable a user platform software feature; and
FIG. 6 is a flowchart illustrating a method for a server to enable and disable user platform software features during a marketing campaign.

### DETAILED DESCRIPTION OF THE ILLUSTRATED EMBODIMENTS

The following description is provided to enable any person skilled in the art to make and use the invention, and is provided in the context of a particular application and its requirements. Various modifications to the embodiments will be readily apparent to those skilled in the art, and the generic principles defined herein may be applied to other embodiments and applications without departing from the spirit and scope of the invention. Thus, the present invention is not intended to be limited to the embodiments shown, but is to be accorded the widest scope consistent with the principles, features and teachings disclosed herein.

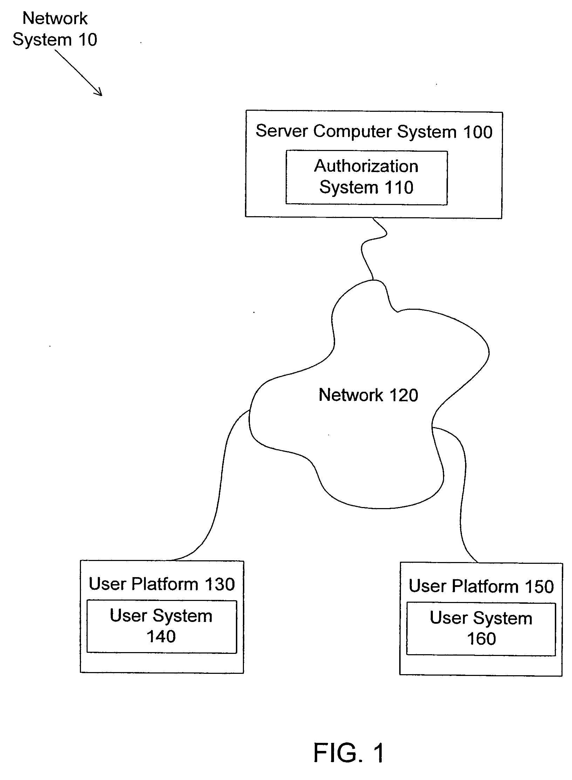

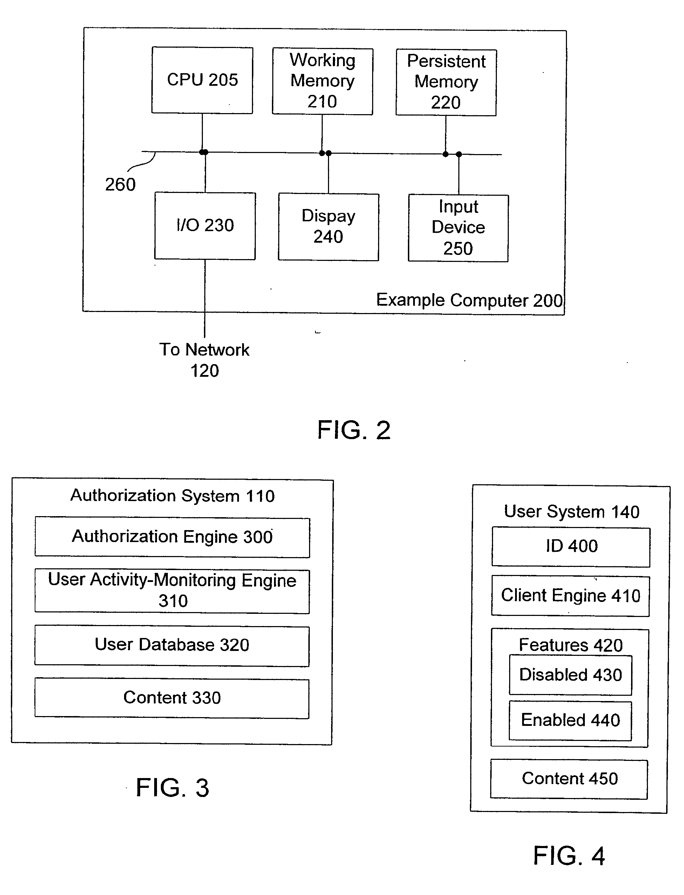

FIG. 1 is a block diagram illustrating a network system 10 in accordance with an embodiment of the present invention. The network system 10 comprises a server 100, a user platform 130, and a user platform 150, all communicatively coupled, via wired or wireless techniques, to a network 120, such as the Internet. In another embodiment of the invention, the network system may comprise additional servers and user platforms. Server 100 includes an authorization system 110 that can send commands to user platform 130 or 150 to enable or disable features of software, such as displaying multimedia messages, installed on the platforms 130 or 150. Authorization system 110 will be discussed in further detail in conjunction with FIG. 3.

User platforms 130 and 150 may be personal digital assistants, laptop computers, mobile phones, or any other device capable to communicate with server 100. User platform 130 and 150 each comprise a user system 140 and 160, respectively. User system 140 may be substantially similar to user system 160 and includes software with a set of features. The features may be all be enabled or disabled or subsets of feature may be enabled or disabled. User system 140 will be discussed in further detail in conjunction with FIG. 4.

FIG. 2 is a block diagram illustrating an example computer 200 in accordance with the present invention. In an embodiment of the invention, server 100 and user platforms 130 and 150 may include or be resident on example computer 200. The example computer 200 includes a central processing unit (CPU) 205; working memory 210; persistent memory 220; input/output (I/O) interface 230; display 240 and input device 250, all communicatively coupled to each other via system bus 260. CPU 205 may include an Intel Pentium® microprocessor, a Motorola Power PC® microprocessor, or any other processor capable to execute software stored in persistent memory 220. Working memory 210 may include random access memory (RAM) or any other type of read/write memory devices or combination of memory devices. Persistent memory 220 may include a hard drive, read only memory (ROM) or any other type of memory device or combination of memory devices that can retain data after example computer 200 is shut off. I/O interface 230 is communicatively coupled, via wired or wireless techniques, to network 120. In an alternative embodiment of the invention, I/O interface 230 may be directly communicatively coupled to a server or computer, thereby eliminating the need for network 120. Display 240 may include a cathode ray tube display or other display device. Input device 250 may include a keyboard, mouse, or other device for inputting data, or a combination of devices for inputting data.

One skilled in the art will recognize that the example computer 200 may also include additional devices, such as network connections, additional memory, additional processors, LANs, input/output lines for transferring information across a hardware channel, the Internet or an intranet, etc. One skilled in the art will also recognize that the programs and data may be received by and stored in the system in alternative ways.

FIG. 3 is a block diagram illustrating the authorization system 110 of server 100 (FIG. 1). The authorization system 110 comprises an authorization engine 300; a user activity-monitoring engine 310; a user database 320, and optionally contents 330. The authorization engine 300 sends commands to user platform 130 and/or 150 to enable or disable features of software, such as features 420 of client engine 410 (FIG. 4), stored in user platform 130 and/or 150 memory. Features may include displaying multimedia messages for a marketing campaign. The authorization engine 300 may also send new features and/or content to user platform 130 and/or 150. The authorization engine 300 determines when to send new features and/or commands to enable or disable features based on data stored in the user database 320 and/or other factors. The authorization engine 300 may also send content 330 to user platform 130 and/or 150 for use with newly enabled features. For example, user platform 130 may have an enabled first feature to show an advertisement announcement regarding a special multimedia message on a specific date from a singer or other performer. When the specific date arrives, the authorization engine 300 can look up users in user database 320 and then send commands to user platform 130 to disable the advertisement announcement and enable the special message. The authorization engine 300 may also send content from content 330 to user platform 130 that relates to the special message.

User activity-monitoring engine 310 monitors activity on user platform 130 and/or 150 during marketing campaigns and updates user database 330 accordingly. Engine 310 monitors activity by receiving reports from client engine 410 (FIG. 4) as will be discussed further below in conjunction with FIG. 4. For example, user activity-monitoring engine 310 may monitor usage of marketing software including sending marketing email to friends, viewing advertisements, viewing marketing websites, sending movie trailers to friends, etc. and then updates user database 330. In another embodiment of the invention, user activity-monitoring engine 310 may monitor user platform 130 activities and inform authorization engine 300 when an act occurred that entitles enablement of a software feature of user platform 130. For example, user platform 130 may have enabled a software feature, such as viewing a music video before its release to the general public, when a user of user platform 130 sends a video commercial from a marketing campaign to a pre-specified number of email addresses. The user activity-monitoring engine 310 may monitor user platform 130 and as soon as the user sends the fiftieth email, the user activity-monitoring engine 310 may notify authorization engine 300 to enable a software feature to view the music video. The authorization engine 300 then sends a command to the user platform 130 to enable the software feature to view the music video and sends the music video to the user platform 130. Alternatively, the music video may be stored in memory of the user platform 130 but non-viewable until the software feature to view it is enabled.

User database 320 comprises user records and associated data, such as users' email addresses, users' demographic data, users' client computer IDs, enabled and disabled features for each client computer, content IDs to be sent with newly enabled features, and users' monitored computer activities, etc. Further, in an embodiment of the invention, user database 320 may include, for each user record, a list of disabled features authorized-to-be-enabled and/or disabled features authorized-to-be-enabled pending certain conditions, such as a date or time. In addition, the list of disabled features to be enabled may also include enablement levels for each feature. User activity monitoring engine 310 can update this list whenever it monitors client computer activities previously selected to activate features, e.g., sending fifty emails per the example above. Alternatively, the list of features authorized-to-be-enabled can be updated via input from a server user. It will be recognized by one skilled in the art that the list of features authorized-to-be-enabled may be maintained in other formats besides lists described above. For example, the list of features may be maintained in tables, linked lists, or other formats.

Content 330 includes content to send to user platform 130 and/or 150 with newly enabled features. In an alternative embodiment, content 330 may include addresses of content to download from a second server (not shown).

FIG. 4 is a block diagram illustrating the user system 140 of user platform 130 (FIG. 1). In an embodiment of the invention, user system 160 may be substantially similar to user system 140. User system 140 comprises an identification (ID) 400, a client engine 410, features 420, which includes a subset of disabled features 430 and a subset of enabled features 440, and optionally content 450. ID 400 is a unique identification of user system 140 that can be generated based on a software ID embedded when downloading and installing client engine 410; a computer ID based on characteristics of an installed operating system and/or other factors; an email address associated with a computer ID; and/or a content ID.

Client engine 410 is software that has a set of features 420. The features 420 may include subsets of disabled features 430 and enabled features 440. Features 420 may include displaying video, audio and/or text data, video conferencing, instant messaging, chat, and/or other features. For example, enabled features 440 may include an enabled chat feature with different levels of enablement. At a first level of enablement, using the chat feature may only enable a user to view a conversation between others, such as contest winners and a famous musician. At a second level of enablement, using the chat feature may enable chatting with the famous musician. If the chat feature is disabled, then a user would be unable to use the chat feature at all. Alternatively, client engine 410 may only provide access to a server to view multimedia messages or use other features and authorization engine 300 would control access to the multimedia messages or other features on the server.

Client engine 410 may also report client engine 410 user activity during a marketing campaign to user activity-monitoring engine 310 so that engine 310 can update user database 320 accordingly. For example, if a user uses client engine 410 to send a marketing email, client engine 410 will notify user activity monitoring engine 320 than an email was sent, and engine 320 will then update user database 330 accordingly. Further, if a user uses client engine 410 to view advertisements from a marketing campaign and to click through banner advertisements, the client engine 410 may notify engine 320 of the number of advertisements viewed, what type of advertisements were viewed, how many banner advertisements were clicked through, which banner advertisements were clicked through, etc. In another embodiment, if a user uses client engine 410 to forward movie trailers, engine 410 will notify user activity-monitoring engine 310 so that engine 310 can update database 320 accordingly. Upon forwarding preset number of trailer, the user may be able to view the movie via client engine 410 or receive tickets to view the movie.

Client engine 410 also sends requests to authorization engine 300 to use disabled features. If the authorization engine 300 authorizes use of the feature, then client engine 410 receives enablement instructions/commands to enable a disabled feature from features 420 from authorization engine 300. Upon receipt of the instructions, client engine 410 enables the disabled feature so that the feature can be used. For example, a user may try to access a disabled chat feature. Client engine 410 will contact authorization engine 300 to notify engine 300 that the user wants to access the feature. If authorization engine 300 determines that the feature should be enabled, engine 300 will send a command to client engine 410 to enable the feature, which client engine 410 will then do.

In addition, client engine 410 may enable disabled features at different levels of enablement. If a received enablement command from authorization engine 300 includes a level of enablement, then client engine 410 will enable the disabled feature only up to the level of enablement specified by the command. For example, a chat feature may have two levels of enablement: view chat and participate in the chat. If a user tries to access the disabled chat feature, the client engine 410 will inquire with the authorization engine 300. If client engine 410 is authorized to use the feature, the authorization engine 300 will determine the level of enablement and send a command to client engine 410 to enable the chat feature at the level of enablement authorized.

Content 450 includes content to be used with features 420. If the content is only for use with disabled features 430, the content 450 may be encrypted to prevent unauthorized use of the content 450. Client engine 410 may then decrypt content 450 upon enablement of an associated feature. Content 450 may include audio, video, and/or text data or a combination thereof.

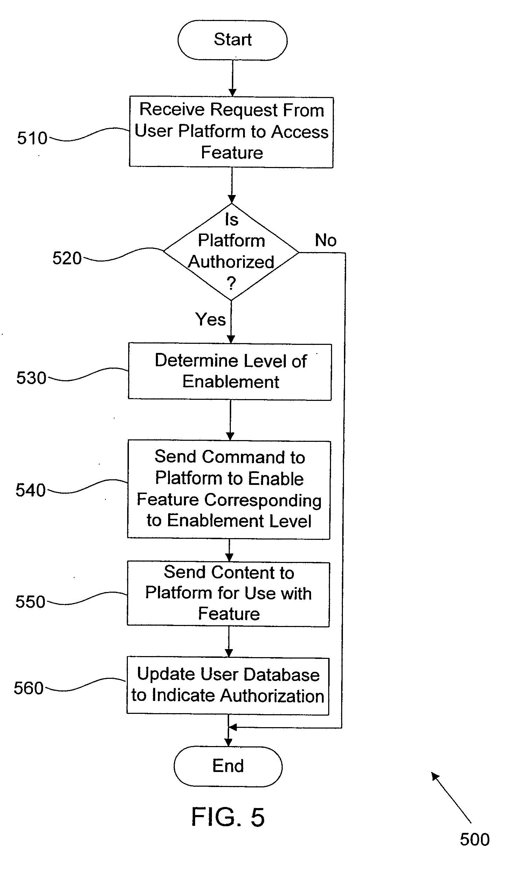

FIG. 5 is a flowchart illustrating a method 500 for a server to enable a client computer software feature, such as displaying a multimedia marketing message. In an embodiment of the invention, authorization engine 300 performs method 500. Further, authorization engine 300 may run multiple instances of method 500 simultaneously. First, a request from a user platform to access a feature, such as viewing a multimedia message from features 420 and content 450, is received (510). The request may include identification of the feature and a user identification, such as ID 400. Alternatively, a request may be received from or by an alternative source, such as user activity-monitoring engine 310. Next, it is determined (520) if the user platform is authorized to access the feature. To determine if the user platform is authorized the access the feature, a list of disabled features that are authorized-to-be-enabled for a user platform is looked up in a database, such as database 320, based on a user platform ID, such as ID 400. In another embodiment of the invention, the list of disabled features that are authorized-to-be-enabled includes conditions for enablement, such as occurrence of a date or time. It is determined if the condition is met, and if the condition is met, then the feature can be enabled.

If the feature that access was requested to is not listed in the authorized features list, then the method 500 ends. Alternatively, if the feature that access was requested to is listed in the authorized features list, then the level of enablement for the feature, if any, is determined (530). To determine the level of enablement, if any, the same authorized features list in a user database may be examined. Next, a command to enable the requested feature is sent (540) to the user platform. The command also indicates the level of enablement, if any, for the feature. If there is any content needed for the feature that is not stored in the user platform, then content associated with the feature is sent (550) to the user platform. Content can be sent from locally stored content, such as content 330, or may be sent from another server or other content source. After sending (550) the content, if any, the user database, such as database 320, is updated (560) to reflect the newly enabled feature for the user platform. The method then ends.

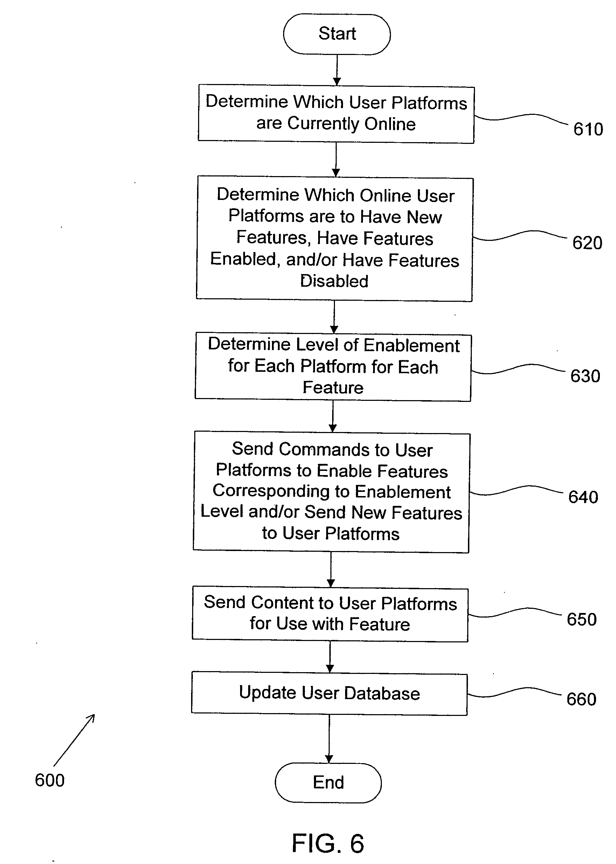

FIG. 6 is a flowchart illustrating a method 600 for a server to enable and disable user platform software features during a marketing campaign. In an embodiment of the invention, authorization engine 300 performs method 600. First, it is determined (610) which user platforms are online. This determination can be done at regularly scheduled intervals or continuously during a marketing campaign. Next, it is determined (620) which online user platforms are entitled to have features enabled, disabled or to receive new features. This determination can be done by looking up a features to be enabled list in a user database, such as database 320. Alternatively, the determination can be based on receiving authorization directly from the user activity-monitoring engine 310. In another embodiment of the invention, the list of disabled features that are authorized-to-be-enabled includes conditions for enablement, such as occurrence of a date or time. It is determined if the condition is met, and if the condition is met, then the feature can be enabled.

After determining (620) which online user platforms are entitled to have features enabled, disabled or to receive new features, it is determined (630) for new features and/or for newly enabled features the level of enablement, if any, for these features. This determination can be made by looking up a list of features to be enabled in a user database, such as database 320, for the appropriate enablement level for each user platform. Next, commands to enable and/or disable existing features and/or add new features is sent (640) and their corresponding enablement levels, if any, to the online user platforms.

Afterwards, any content associated with the new features or newly enabled features, such as content from content 340, is sent (650) to the user platforms. Next, a user database, such as database 330, is updated (660) to reflect the newly enabled and/or disabled features and/or new features. The method 600 then ends.

The foregoing description of the preferred embodiments of the present invention is by way of example only, and other variations and modifications of the above-described embodiments and methods are possible in light of the foregoing teaching. For example, authorization for enabling features can be received directly from other servers in place of from user-activity monitoring client 320. Although the network sites are being described as separate and distinct sites, one skilled in the art will recognize that these sites may be a part of an integral site, may each include portions of multiple sites, or may include combinations of single and multiple sites. Further, components of this invention may be implemented using a programmed general purpose digital computer, using application specific integrated circuits, or using a network of interconnected conventional components and circuits. Connections may be wired, wireless, modem, etc. The embodiments described herein are not intended to be exhaustive or limiting. The present invention is limited only by the following claims.

## Claims

1. A server-side marketing method, comprising:
determining if a client is authorized to use a marketing-related feature; and
sending, to the client, a command to enable the feature if the client is authorized to use the feature.

2. The method of claim 1, further comprising determining a level of enablement for the feature.

3. The method of claim 2, wherein the command includes an instruction corresponding to the level of enablement for the feature.

4. The method of claim 1, further comprising updating a user database to reflect enablement of the feature.

5. The method of claim 1, wherein the determining does not occur until receiving a request, from the client, to access a disabled feature.

6. The method of claim 1, wherein the determining occurs at regularly scheduled intervals.

7. The method of claim 1, further comprising sending, to the client, content associated with the feature.

8. The method of claim 7, wherein the content includes a multimedia message from a marketing campaign.

9. The method of claim 1, wherein the determining comprises:
accessing a user database listing features that are authorized-to-be-enabled; and
determining if the feature is listed in the user database.

10. The method of claim 1, wherein the determining comprises:
accessing a user database listing features that are authorized-to-be-enabled upon a condition occurring;
determining if the feature is listed in the database; and
determining if the condition has occurred.

11. The method of claim 10, wherein the condition includes the client having sent a predetermined number of marketing emails from a marketing campaign.

12. The method of claim 10, wherein the condition includes the client having displayed a predetermined number of advertisements from a marketing campaign.

13. A machine-readable medium having stored thereon machine-readable code to permit a machine to effect a marketing method, the method comprising:
determining if a client is authorized to use a marketing-related feature; and
sending, to the client, a command to enable the feature if the client is authorized to use the feature.

14. The machine-readable medium of claim 13, the method further comprising determining a level of enablement for the feature.

15. The machine-readable medium of claim 14, wherein the command includes an instruction corresponding to the level of enablement for the feature.

16. The machine-readable medium of claim 13, the method further comprising updating a user database to reflect enablement of the feature.

17. The machine-readable medium of claim 13, wherein the determining does not occur until receiving a request, from the client, to access a feature.

18. The machine-readable medium of claim 13, wherein the determining occurs at regularly scheduled intervals.

19. The machine-readable medium of claim 13, the method further comprising sending, to the client, content associated with the feature.

20. The machine-readable medium of claim 19, wherein the content include a multimedia message from a marketing campaign.

21. The machine-readable medium of claim 13, wherein the determining comprises:
accessing a user database listing disabled features that are authorized-to-be-enabled; and
determining if the disabled feature is listed in the user database.

22. The machine-readable medium of claim 13, wherein the determining comprises:
accessing a user database listing disabled features that are authorized-to-be-enabled upon a condition occurring;
determining if the disabled feature is listed in the database; and
determining if the condition has occurred.

23. The machine-readable medium of claim 22, wherein the condition includes the client having sent a predetermined number of marketing emails from a marketing campaign.

24. The machine-readable medium of claim 22, wherein the condition includes the client having displayed a predetermined number of advertisements from a marketing campaign.

25. A marketing server system, comprising:
means for determining if a client is authorized to use a marketing-related feature; and
means for sending, to the client, a command to enable the feature if the client is authorized to use the feature.

26. A marketing server system, comprising:
a database storing a list of client device features authorized-to-be-enabled;
an authorization client, communicatively coupled to the user database and to a client device, capable to search the database to determine if a client device marketing-related feature is authorized to be used, and to send, to the client device, a command to enable the feature if the client is authorized to use the feature.

27. The system of claim 26, wherein the authorization client is further capable to determine a level of enablement for the feature.

28. The system of claim 27, wherein the command includes an instruction corresponding to the level of enablement for the feature.

29. The system of claim 26, wherein the authorization client is further capable to update the database to reflect enablement of the feature.

30. The system of claim 26, wherein the authorization client does not search the database until receiving a request, from the client device, to access a feature.

31. The system of claim 26, wherein the authorization client searches the database at regularly scheduled intervals.

32. The system of claim 26, wherein the authorization client is further capable to send, to the client, content associated with the feature.

33. The system of claim 32, wherein the content includes a multimedia message from a marketing campaign.

34. The system of claim 26, wherein the database further lists a required condition to enable a feature and wherein the authorization client is further capable to determine if the condition is met.

35. The system of claim 34, wherein the condition includes the client device having sent a predetermined number of marketing emails from a marketing campaign.

36. The system of claim 34, wherein the condition includes the client device having displayed a predetermined number of advertisements from a marketing campaign.

37. The system of claim 26, further comprising a monitoring client capable to monitor activity of the client device and update the database to reflect the activity.

38. A server-side marketing method, comprising:
determining if a client is authorized to use a new marketing-related feature; and
sending, to the client, a command to enable the new feature if the client is authorized to use the new feature.

39. A client-side method, comprising:
storing a program with currently disabled marketing-related features;
reporting marketing-related user activity to a server system;
receiving a command to enable at least one disabled marketing-related feature, the command being based on the reported user activity; and
enabling the at least one disabled feature in accordance with the command.
